# FASCICULE DE BREVET EUROPEEN

(11) **EP 3 627 419 B1**
(45) Date de publication et mention de la délivrance du brevet: **07.02.2024**
(21) Numéro de dépôt: 19207568.7
(22) Date de dépôt: 11.02.2015
(51) Int. Cl.: G06Q 20/02, G06Q 20/20, G06Q 20/32, G06Q 20/40

(54) **TRANSACTION SÉCURISÉE UTILISANT UN DISPOSITIF MOBILE**
SICHERE TRANSAKTION MIT EINEM MOBILGERÄT
SECURE TRANSACTION USING A MOBILE DEVICE

(30) Priorité: 14.02.2014 FR 1451202
(43) Date de publication de la demande: 25.03.2020
(62) Demande divisionnaire de: 15703617.9
(73) Titulaire: Bancontact Payconiq Company, 1040 Bruxelles (BE)
(72) Inventeur: HUQUE, Thierry, 1367 Grand-Rosiere (BE); WOUTERS, Karel, 3530 Houthalen (BE); DE MEESTER, Jan, 2600 Berchem (BE); ASSELBERG, Mike, 9031 Baarle-Drongen (gent) (BE)
(74) Mandataire: Cabinet Beaumont

(56) Documents cités:
- EP-A1- 2 189 932
- EP-A1- 2 631 860
- WO-A2-02/29739
- WO-A2-2011/130422

## Description

### DOMAINE

La présente description concerne un procédé et un système pour réaliser une transaction électronique en utilisant un dispositif mobile, et en particulier un procédé et un système pour réaliser une transaction électronique sécurisée.

### ARRIERE-PLAN

L'utilisation de dispositifs de communication mobiles, comme des téléphones mobiles, pour réaliser des transactions de paiement électronique, est de plus en plus répandue, et a le potentiel de remplacer un jour complètement la plupart des paiements par carte.

Pour servir de mécanisme de paiement, les téléphones mobiles et d'autres types de dispositifs mobiles sont de plus en plus souvent équipés d'interfaces NFC (Near Field Communication - communication en champ proche), qui leur permettent de réaliser des fonctions de transpondeurs électromagnétiques en plus de leurs autres fonctions. En particulier, de tels dispositifs sont aptes à émuler les fonctions d'un transpondeur électromagnétique qui pourrait être du type carte sans contact. De telles fonctionnalités améliorent par exemple le dispositif mobile, en lui permettant d'être utilisé pour diverses applications, par exemple comme portefeuille électronique permettant de réaliser des paiements pour accéder à des services comme des réseaux de transport.

Bien qu'un tel mécanisme de paiement soit approprié pour certains types de paiement, il existe un besoin dans la technique pour un mécanisme de paiement alternatif sécurisé et versatile.

WO 2011/130422 A2 divulgue des modes de réalisation d'un système de paiement qui concernent le dispositif mobile d'un consommateur (par exemple un téléphone mobile) qui envoie les détails de transactions à des fins d'autorisation, au lieu que le commerçant envoie les détails de la transaction à des fins d'autorisation. Il n'est donc plus nécessaire que le consommateur présente les informations de compte de paiement au commerçant. Les détails de la transaction peuvent contenir un montant et des informations de déclenchement du paiement du commerçant. Dans un mode de réalisation, le dispositif mobile du consommateur peut directement entrer en contact avec un émetteur sans utiliser le réseau de traitement de paiement classique. L'émetteur peut alors accepter ou refuser la transaction et communiquer directement avec l'émetteur, le commerçant ou le client effectuant un achat chez le commerçant. Dans un mode de réalisation, il peut être nécessaire de transmettre les détails de la transaction depuis un dispositif informatique (par exemple un PC) utilisé par le consommateur qui n'est pas situé chez le commerçant. Dans ce mode de réalisation, les détails de la transaction peuvent être codés dans un format particulier pouvant être reçu et lu par le dispositif mobile du consommateur. Le format peut être un identifiant de détails de la transaction ou une charge utile de données contenant les détails de la transaction. L'identifiant des détails de la transaction ou la charge utile de données contenant les détails de la transaction peut être un message SMS ou MMS, un code à barres, une image avec filigrane ou un identifiant manuel qui représente les détails de la transaction. Le message SMS/MMS, avec la charge utile contenant les détails de la transaction ou l'identifiant, peut être reçu par le dispositif mobile. Le code à barres, l'image de texte, ou l'image comportant un filigrane peut être lu à l'aide de la caméra du dispositif mobile ou d'un autre moyen d'entrée.

### RESUME

Un objet de modes de réalisation de la présente description est de résoudre au moins partiellement un ou plusieurs besoins de l'art antérieur.

L'invention est définie par les revendications en annexe.

### BREVE DESCRIPTION DES DESSINS

Les caractéristiques et avantages susmentionnés, et d'autres, apparaîtront clairement à la lecture de la description détaillée suivante de modes de réalisation, faite à titre illustratif et non limitatif, en référence aux dessins joints dans lesquels :
la figure 1 illustre schématiquement un dispositif mobile et un élément de transaction selon un exemple de réalisation de la présente description ;
la figure 2 illustre schématiquement le dispositif mobile de la figure 1 plus en détail selon un exemple de réalisation de la présente description ;
la figure 3 représente schématiquement des communications entre des éléments dans un système de transaction électronique selon un exemple de réalisation de la présente description ;
la figure 4 est un organigramme représentant des étapes dans un procédé de réalisation d'une transaction électronique selon un mode de réalisation de la présente description ;
la figure 5 illustre un exemple de matériel mettant en oeuvre des éléments du système de la figure 3 selon des exemples de réalisation de la présente description ; et
la figure 6 illustre une partie d'un système de paiement selon un autre exemple de réalisation de la présente description.

### DESCRIPTION DETAILLEE

Divers exemples de mise en œuvre et de réalisation sont exposés par la suite. Seules les parties de la présente description qui sont incluent dans la portée des revendications font partie de la présente invention, les autres exemples n'étant utiles que pour mettre en évidence des aspects spécifiques à l'invention par rapport à ce qui n'en fait pas partie.

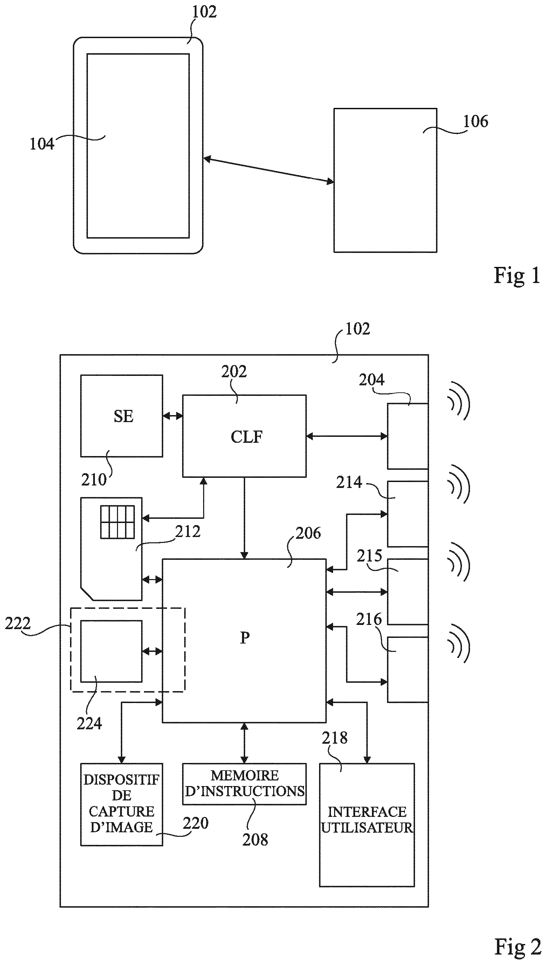

La figure 1 illustre schématiquement un dispositif mobile 102 apte à des communications sans fil, et à réaliser une transaction électronique. Par exemple, le dispositif mobile 102 est un téléphone mobile, un téléphone intelligent, une tablette informatique, un lecteur de médias numériques ou similaire, et comprend un afficheur 104, par exemple un écran tactile.

Le dispositif mobile 102 est représenté en communication avec un élément de transaction 106.

Dans certains modes de réalisation, la communication entre le dispositif mobile 102 et l'élément de transaction se fait au moins partiellement par l'intermédiaire d'une interface sans fil, comme une interface NFC, une connexion de données sans fil par l'intermédiaire d'un réseau de télécommunication, une interface Bluetooth ou un réseau local sans fil (WLAN).

En variante, l'élément de transaction 106 peut communiquer avec le dispositif mobile 102 en utilisant une caméra du dispositif mobile 102. Par exemple, l'élément de transaction 106 peut comprendre un afficheur pour afficher un code à barres comme un code QR (code à réponse rapide), qui peut être capturé par la caméra et interprété en utilisant une application appropriée chargée sur le dispositif mobile 102.

Dans des variantes de réalisation, l'élément de transaction 106 pourrait être intégré dans le dispositif mobile 102. Par exemple, le dispositif mobile 102 peut mémoriser et exécuter une application d'un commerçant mettant en oeuvre l'élément de transaction 106. Dans un tel cas, l'élément de transaction 106 communique par exemple avec d'autres circuits du dispositif mobile en générant une intention, comme une intention d'URL (intention de localisateur uniforme de ressource). Comme cela est bien connu de l'homme de l'art, une intention est un message numérique passé au système d'exploitation d'un dispositif mobile à partir d'une application s'exécutant sur le dispositif mobile, qui provoque l'appel d'une certaine application, et passe des informations, comme un paramètre, à cette application. Par exemple, un type d'intention peut faire en sorte qu'un navigateur web du dispositif mobile accède à un emplacement spécifique. Par exemple, l'intention d'URI (identificateur universel de ressource) *https:*//*web_address* active l'application de navigation d'un dispositif mobile et dirige le navigateur vers l'emplacement identifié par l'adresse web.

Dans certains modes de réalisation, la transaction électronique est un paiement électronique, et l'élément de transaction 106 est un terminal de paiement. En variante, la transaction électronique pourrait être l'un quelconque d'une gamme de services électroniques prévus entre le dispositif mobile 102 et l'élément de transaction 106, comme un paiement électronique, comprenant un paiement par carte ou un paiement sans carte, l'établissement d'une facilité de paiement direct comme un mandat électronique, une signature de document ou de contrat, une vérification de données, comme une vérification d'adresse ou d'âge, et/ou une vérification d'authentification du dispositif mobile ou d'un utilisateur du dispositif mobile. Un mandat électronique est par exemple un accord autorisant un commerçant à recevoir un ou plusieurs paiements à débit direct d'un client.

L'élément de transaction 106 est par exemple positionné au niveau d'une barrière d'entrée d'une zone à accès contrôlé, comme un réseau de transport, ou au niveau d'un point de vente dans un magasin ou un restaurant. Dans de tels cas, le dispositif mobile 102 est par exemple relativement proche de l'élément de transaction 106, et la communication entre le dispositif mobile et l'élément de transaction est par exemple faite par NFC, le dispositif mobile émulant un transpondeur sans fil. A titre de variante, d'autres formes de communications sans fil entre le dispositif mobile 102 et l'élément de transaction 106 pourraient être envisagées, comme une connexion sans fil par Bluetooth ou par l'intermédiaire d'un réseau local sans fil (WLAN).

Dans d'autres modes de réalisation, le dispositif mobile 102 pourrait être éloigné de l'élément de transaction 106, et la communication entre le dispositif mobile et l'élément de transaction pourrait se faire par l'intermédiaire d'un ou plusieurs réseaux intervenants, comme un réseau de données d'un réseau de télécommunication et/ou le réseau internet. Dans un tel cas, l'élément de transaction pourrait correspondre à un serveur distant d'un commerçant.

La figure 2 illustre schématiquement plus en détail le dispositif mobile 102 selon un exemple de réalisation.

Comme cela est illustré, le dispositif 102 comprend par exemple un circuit intégré frontal sans contact (CLF) 202, qui sera appelé ici routeur NFC. Le routeur NFC 202 est couplé à une antenne NFC 204, et ensemble le routeur 202 et l'antenne 204 assurent un circuit NFC pour émuler le comportement d'un transpondeur NFC.

Le routeur NFC 202 est aussi par exemple couplé à un dispositif de traitement hôte (P) 206 du dispositif mobile 102. Le dispositif de traitement 206 comprend par exemple un ou plusieurs processeurs sous le contrôle d'instructions mémorisées dans une mémoire d'instructions (INSTR MEM) 208. Le routeur NFC 202 est aussi par exemple couplé à un élément sécurisé (SE) 210, qui est par exemple un SE intégré (eSE), et/ou à un circuit SIM ou SIM universel 212. Le circuit 212 est par exemple couplé en plus au dispositif de traitement 206. En plus ou à la place, le dispositif de traitement 206 peut réaliser une émulation de carte hôte (HCE), ce qui signifie que des communications NFC sont routées vers le dispositif de traitement hôte 206 qui émule le comportement d'un élément sécurisé NFC. Cela permet de réaliser des transactions NFC sécurisées directement par le dispositif de traitement 206 sans nécessiter la présence d'un élément sécurisé dans le dispositif mobile 102.

Le dispositif de traitement 206 est aussi par exemple couplé à : une antenne 214 permettant des télécommunications dans un réseau cellulaire ; à une antenne 215 permettant des communications Wi-Fi (fidélité sans fil) ; et/ou à une antenne 216 permettant des communications RF à ultra-large bande (ou UWB) . Dans certains modes de réalisation, le dispositif mobile 102 peut comprendre seulement une ou certaines des antennes 214, 215 et 216. Le dispositif mobile 102 comprend en outre une interface d'utilisateur 218, par exemple comprenant un afficheur, un pavé de touches et/ou un écran tactile, couplés au dispositif de traitement 206.

Le dispositif mobile 102 comprend aussi par exemple un dispositif de capture d'image 220, comprenant un capteur d'image pour capturer des images numériques. Par exemple, le dispositif de capture d'image 220 est capable de capturer des codes lisibles par une machine comme des codes QR, et le dispositif mobile 102 mémorise une application logicielle appropriée pour interpréter le code lisible par une machine. En outre, dans certains modes de réalisation, le dispositif de capture d'image 220 ou un capteur d'image séparé est apte à capturer des échantillons biométriques comme une empreinte digitale, une veine de doigt ou une analyse de rétine.

Dans certains modes de réalisation, le dispositif mobile 102 comprend un environnement d'exécution de confiance (TEE) 222 qui par exemple comprend un dispositif mémoire 224 mémorisant une ou plusieurs applications logicielles et une allocation de ressources de traitement du dispositif de traitement 206 pour l'exécution des applications logicielles de façon isolée par rapport à l'exécution d'autres applications logicielles mémorisées dans la mémoire d'instructions. Par exemple, l'environnement d'exécution de confiance 222 est utilisé pour l'exécution d'applications logicielles sensibles, comme une application pour introduire un code PIN (numéro d'identification personnel) et/ou pour capturer un échantillon biométrique.

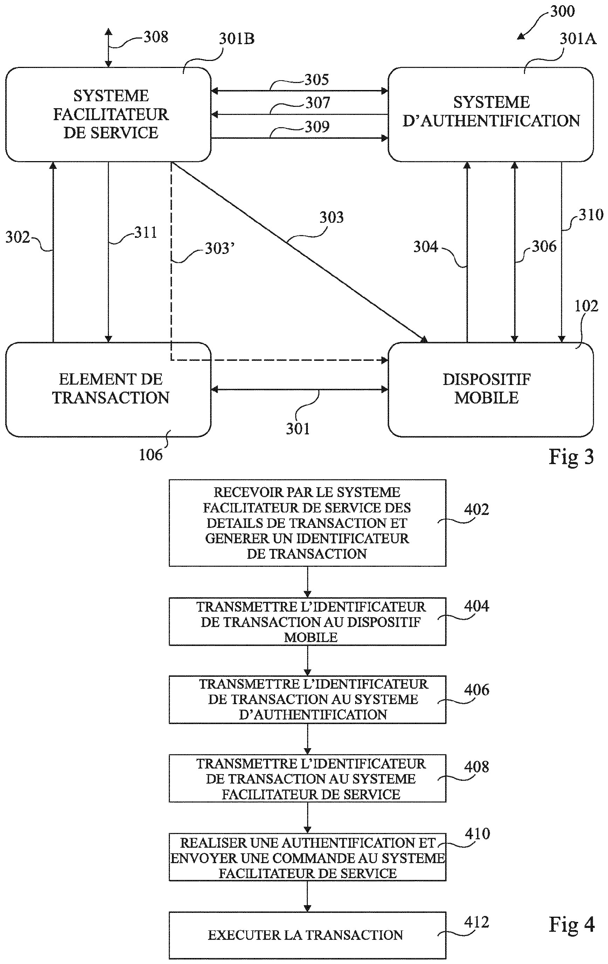

La figure 3 représente un système de transaction électronique 300 prenant en charge l'exécution d'une transaction électronique entre le dispositif mobile 102 et l'élément de transaction 106. Le système 300 comprend, en plus du dispositif mobile 102 et de l'élément de transaction 106, un système d'authentification 301A et un système facilitateur de service 301B. Bien que cela soit illustré sous forme d'éléments séparés en figure 3, comme cela a déjà été mentionné précédemment, dans des variantes de réalisation, l'élément de transaction 106 pourrait être intégré dans le dispositif mobile 102.

Le système d'authentification 301A assure une interface entre le système facilitateur de service 301B et le dispositif mobile 102, et est agencé pour authentifier le dispositif mobile 102 avant l'exécution d'une transaction. Par exemple, le système d'authentification 301A est capable d'établir une connexion de données sécurisée avec le dispositif mobile 102, par exemple en utilisant une cryptographie à clé symétrique ou à clé publique pour la transmission de paquets de données. La connexion sécurisée est par exemple obtenue en utilisant une application s'exécutant dans l'environnement d'exécution de confiance 222 du dispositif mobile 102 et/ou en utilisant un élément sécurisé du dispositif mobile 102, pour mémoriser les données de clé utilisées pour authentifier le dispositif mobile 102. Dans certains modes de réalisation, le système d'authentification 301A correspond à un ou plusieurs serveurs associés à une banque dont un utilisateur du dispositif mobile 102 est client.

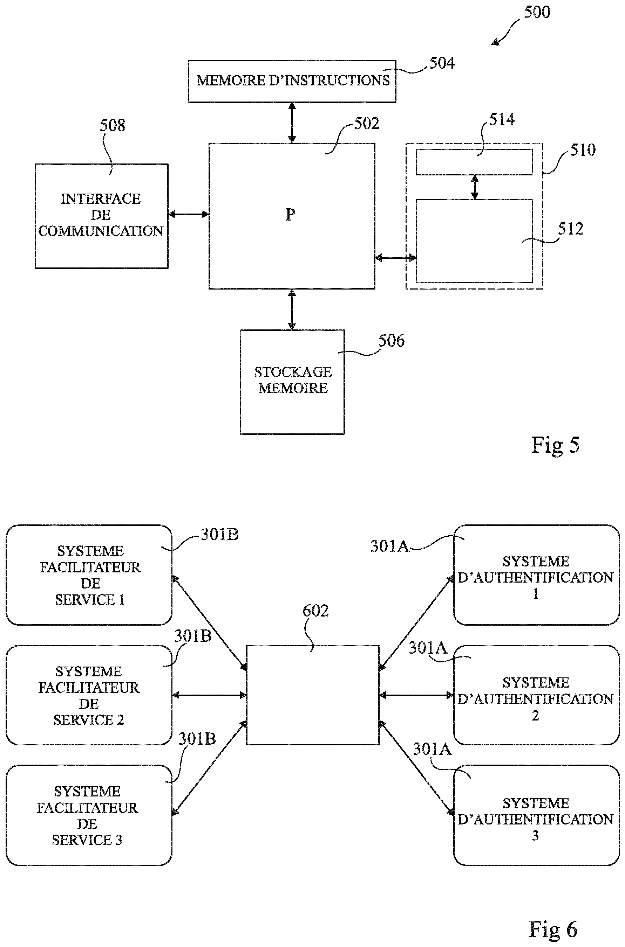

Le système facilitateur de service 301B comprend par exemple un ou plusieurs serveurs agencés pour exécuter ou faciliter d'une autre façon l'exécution de la transaction électronique. Par exemple, dans le cas où la transaction est un paiement électronique, le système facilitateur de service 301B correspond par exemple à un fournisseur de service de paiement, ou une passerelle de paiement, interconnectant plusieurs réseaux de paiement et/ou banques acquéreuses, et est agencé pour réaliser un traitement approprié comme l'authentification et l'effacement en relation avec la transaction de paiement. Bien que cela ne soit pas illustré en figure 3, dans certains modes de réalisation, le système facilitateur de service 301B correspond à un serveur qui assure une interface entre plusieurs éléments de transaction 106 et plusieurs systèmes d'authentification 301A qui peuvent être présents dans le système. En outre, selon l'invention telle que revendiquée et comme décrit plus en détail ci-après en relation avec la figure 6, il y a plusieurs systèmes facilitateurs de service 301B, dont chacun peut être adapté à traiter un type différent de transaction électronique comme des transactions de paiement pour différents types de cartes.

Dans un mode de réalisation, les communications entre le système facilitateur de service 301B et le système d'authentification 301A utilisent une cryptographie à clé symétrique ou à clé publique.

La figure 4 est un organigramme représentant des étapes dans un procédé pour réaliser une transaction électronique en utilisant le dispositif mobile 102. Un exemple d'opérations dans un tel procédé va maintenant être décrit plus en détail en faisant référence aux deux figures 3 et 4.

Dans une opération 402 représentée en figure 4, des détails d'une transaction sont reçus par le système facilitateur de service 301B et un identificateur de transaction est généré.

Par exemple, comme cela est représenté par une flèche à double sens 301 en figure 3, le dispositif mobile 102 et l'élément de transaction 106 interagissent pour initier la transaction électronique.

Dans un exemple, un utilisateur du dispositif mobile 102 a réalisé un achat dans un magasin ou un restaurant, par internet ou en utilisant une application de commerçant sur le dispositif mobile, et souhaite utiliser le dispositif mobile 102 pour réaliser une transaction de paiement. L'utilisateur initie par exemple la transaction de paiement en utilisant le dispositif mobile 102. Pour cela, le dispositif mobile est par exemple amené à proximité de l'élément de transaction 106 pour déclencher des communications NFC entre le dispositif mobile 102 et l'élément de transaction 106, de sorte que les données de transaction sont communiquées au dispositif mobile 102. En variante, l'élément de transaction 106 peut transmettre les détails de la transaction au dispositif mobile 102 par l'intermédiaire de l'internet. Dans tous les cas, l'utilisateur confirme les données de transaction en utilisant un pavé de touches du dispositif mobile, et un message de confirmation est transmis à partir du dispositif mobile 102 vers l'élément de transaction 106, pour initier la création d'une transaction.

Dans un autre exemple, l'utilisateur du dispositif mobile 102 souhaite initier un type de transaction différent, par exemple l'établissement d'un ordre de paiement récurrent, comme un mandat électronique, la signature d'un document ou d'un contrat, un changement d'adresse, ou répondre à une vérification d'adresse ou d'âge. Dans un tel cas, des données de transaction décrivant la transaction sont par exemple transmises au dispositif mobile 102, et l'utilisateur confirme par exemple qu'il souhaite procéder à la transaction sur la base de ces données de transaction. Un message de confirmation est ensuite transmis du dispositif mobile 102 à l'élément de transaction 106.

L'élément de transaction 106 fait ensuite une requête de transaction électronique au système facilitateur de service 301B, comme cela est représenté par la flèche 302, cette requête comprenant les données de transaction. Par exemple, les données de transaction peuvent inclure un ou plusieurs des éléments suivants : un type de transaction de la transaction électronique, par exemple un paiement, une vérification d'âge/adresse, etc., un mandat électronique, etc., des identifiants des parties impliquées dans la transaction, comme un identifiant ou un numéro de compte du commerçant associé à l'élément de transaction 106 et de l'utilisateur du dispositif mobile 102 ; et d'autres détails appropriés de la transaction, comme un montant de paiement, une devise, les détails d'un mandat à exécuter, etc.

En réponse à la réception des données de transaction, le système facilitateur de service 301B mémorise par exemple ces données dans une mémoire (non illustrée en figure 3), et génère l'identificateur de transaction associé à la transaction. Par exemple, l'identificateur de transaction pourrait être une valeur binaire d'au moins 32 bits de long. L'identificateur de transaction identifie par exemple de façon unique la transaction. Par exemple, deux transactions faites le même jour par le même utilisateur vers le même élément de transaction 106 en utilisant le dispositif mobile 102 vont recevoir chacune l'affectation d'un identificateur de transaction différent par le système facilitateur de service 301B.

Dans une opération suivante 404 en figure 4, l'identificateur de transaction est transmis au dispositif mobile 102. Cette opération est représenté par une flèche 303 en figure 3.

Selon l'invention telle que revendiquée, cette opération implique la transmission par le système facilitateur de service 301B d'un jeton électronique au dispositif mobile 102, le jeton électronique comprenant l'identificateur de la transaction. En outre, le jeton électronique comprend des données identifiant le système facilitateur de service 301B qui a émis le jeton. Par exemple, le jeton électronique comprend un URL ou une adresse web du système facilitateur de service 301B. En outre, dans certains modes de réalisation, le jeton peut comprendre un identificateur sécurisé, permettant au jeton d'être authentifié par le dispositif mobile et/ou le système d'authentification 301A.

Le jeton prend par exemple la forme d'un code QR (code à réponse rapide) qui peut être décodé par une application appropriée mémorisée sur le dispositif mobile 102. Dans un autre mode de réalisation, le jeton peut prendre la forme d'une intention d'URL qui appelle une application de transaction ou de paiement mémorisée dans le dispositif mobile 102, et passe à cette application les données du jeton électronique. Dans certains modes de réalisation, le jeton électronique peut être transmis au dispositif mobile 102 par l'internet et/ou par l'intermédiaire d'un réseau de données ou d'un réseau de communication.

En variante, comme cela est représenté par une flèche 303' en pointillés en figure 3 qui passe à travers l'élément de transaction 106, dans le cas où le dispositif mobile 102 est déjà en communication NFC avec l'élément de transaction 106, le jeton électronique peut être transmis au dispositif mobile 102 par l'intermédiaire de l'élément de transaction 106 et en utilisant l'interface NFC, ou dans le cas où le jeton est un élément visuel comme un code QR, il pourrait être transmis vers et affiché sur un afficheur de l'élément de transaction 106, puis être capturé par une caméra du dispositif mobile 102.

Dans une opération suivante 406 en figure 4, l'identificateur de transaction est transmis par le dispositif mobile 102 au système d'authentification 301A. Selon l'invention telle que revendiquée, le dispositif mobile 102 transmet une requête d'initialisation de transaction au système d'authentification 301A comprenant l'identificateur de transaction. Cette opération est représentée par une flèche 304 en figure 3. Par exemple, dans un mode de réalisation, la réception par le dispositif mobile 102 du jeton électronique contenant l'identificateur de transaction active une application du dispositif mobile 102 associée au système d'authentification 301A, qui provoque la transmission de la requête d'initialisation de transaction comprenant l'identificateur de transaction au système d'authentification 301A.

Dans une opération suivante 408 en figure 4, l'identificateur de transaction est transmis par le système d'authentification 301A au système facilitateur de service 301B. Selon l'invention telle que revendiquée, le système d'authentification 301A identifie le système facilitateur de service sur la base des données incluses dans ou faisant partie de l'identificateur de transaction identifiant le système facilitateur de service. Cette opération est représentée par une flèche 305 en figure 3. Selon l'invention telle que revendiquée, l'identificateur de transaction est transmis au système facilitateur de service 301B sous la forme d'une requête pour les données de transaction, et le système facilitateur de service 301B répond en fournissant au système d'authentification 301A au moins certaines des données de transaction associées à la transaction. Dans un mode de réalisation, sur la base de l'identificateur de transaction, le système facilitateur de service 301A peut localiser dans sa mémoire les données de transaction associées fournies à l'origine par l'élément de transaction 106.

Dans le cas de transactions de paiement, un type de paiement peut être sélectionné par le dispositif mobile 102 ou par l'élément de transaction 106. Par exemple, le type de paiement indique un type de carte de paiement, qui peut correspondre à la marque de la carte, comme VISA, MASTERCARD, AMERICAN EXPRESS, etc. (les noms VISA, MASTERCARD et AMERICAN EXPRESS peuvent être associés à une ou plusieurs marques déposées). Comme le remarquera l'homme de l'art, la sélection d'une marque de carte de paiement à utiliser pour une transaction conduit à un traitement spécifique du paiement. En effet, les étapes techniques impliquées dans le traitement de paiements de différentes marques diffèrent fortement, ce qui signifie que chaque marque de carte doit être traitée comme un type de paiement différent et distinct. En plus ou à la place, le type de paiement indique un moyen de paiement à utiliser pour la transaction, par exemple un paiement utilisant le numéro PAN (numéro de compte principal) d'une carte de crédit ou de débit, ou un numéro IBAN (transfert bancaire international).

Dans certains modes de réalisation, le système facilitateur de service 301B peut transmettre au système d'authentification 301A une liste d'un ou plusieurs types de paiements acceptés par l'élément de transaction 106, en d'autres termes par le commerçant. Le système d'authentification 301A peut ensuite sélectionner l'un des types de paiement acceptés comme type par défaut à proposer à l'utilisateur du dispositif mobile 102. En variante ou en plus, une indication d'une pluralité de types de paiements acceptés peut être transmise au dispositif mobile 102, et l'utilisateur du dispositif mobile 102 peut se voir donner une option consistant à sélectionner l'un de ces types de paiement à utiliser pour la transaction.

Dans d'autres modes de réalisation, le système d'authentification 301A indique au système facilitateur de service 301B, avec la requête de données de transaction, un ou plusieurs types de paiement acceptés par le dispositif mobile 102 et/ou par le système d'authentification 301A, et le système facilitateur de service 301B et/ou l'élément de transaction 106 peuvent sélectionner un type de paiement préféré parmi ces types de paiement, et informer le système d'authentification 301A de cette sélection lors de la transmission des données de transaction.

Dans une opération suivante 410 en figure 4, une authentification est réalisée.

Par exemple, comme cela est représenté par une flèche 306 en figure 3, l'authentification implique le lancement par le système d'authentification 301A d'une application d'authentification sur le dispositif mobile 102. L'application d'authentification est par exemple exécutée dans l'environnement d'exécution de confiance 222 du dispositif mobile 102, et/ou par un élément sécurisé du dispositif 102. L'authentification du dispositif mobile 102 implique de vérifier des données maintenues ou fournies par le dispositif mobile 102.

Dans certains modes de réalisation, l'authentification du dispositif mobile implique de vérifier que le dispositif mobile est actionné par un utilisateur autorisé. Cela implique par exemple de demander que l'utilisateur du dispositif mobile 102 fournisse des données d'entrée, comme un échantillon biométrique, un code PIN ou un mot de passe. Par exemple, dans un mode de réalisation, l'application d'authentification demande que l'utilisateur tape un code PIN ou un mot de passe sur un pavé de touches du dispositif mobile 102 et/ou place un doigt sur un capteur d'empreintes digitales du dispositif mobile 102, et capture une image de l'empreinte de doigt. Quel que soit le type de données d'utilisateur qui est introduit, la vérification de ces données se produit par exemple dans l'environnement d'exécution de confiance 222 du dispositif mobile, et le résultat de l'authentification est transmis au système d'authentification 301A. A titre de variante, les données d'utilisateur sont transmises par le dispositif mobile 102 au système d'authentification 301A, et la vérification de ces données est réalisée par le système d'authentification 301A.

En plus ou à la place, le dispositif mobile 102 peut être authentifié en vérifiant des données, comme une clé secrète, mémorisées par le dispositif mobile 102, par exemple dans l'élément sécurisé 210.

Pendant le processus d'authentification, le système d'authentification 301A transmet aussi par exemple au moins certains des détails de la transaction au dispositif mobile 102, comme un montant de paiement et/ou une indication de commerçant, et demande de confirmer que la transaction peut se dérouler. Dans un tel cas, le dispositif mobile 102 répond par exemple au système d'authentification 301A par un message de confirmation confirmant que l'utilisateur a accepté la transaction. En variante, dans le cas où l'utilisateur refuse la transaction ou le cas où l'authentification échoue, le système d'authentification 301A est par exemple informé, et la transaction est annulée.

Aussi, dans l'opération 410, si l'authentification a été réalisée avec succès par le système d'authentification 301A, le système d'authentification génère ensuite par exemple une commande d'exécution de transaction provoquant l'exécution de la transaction dans une opération suivante 412 de la figure 4.

Comme cela est représenté par une flèche 307 en figure 3, la commande d'exécution de transaction est transmise par le système d'authentification 301A au système facilitateur de service 301B. Dans certains modes de réalisation, cette commande peut être accompagnée d'une preuve d'authentification, comme une confirmation cryptographique, signée par le système d'authentification 301A, assurant que l'authentification a réussi. Le système facilitateur de service 301B exécute ensuite par exemple la transaction électronique, soit directement, soit en initiant la transaction et en amenant d'autres systèmes à achever la transaction. En effet, dans certains modes de réalisation dans lesquels la transaction est une transaction de paiement par carte, comme cela est représenté par une flèche 308 en figure 3, l'exécution de la transaction peut impliquer un traitement additionnel par un ou plusieurs autres systèmes, comme une autorisation de paiement et un effacement. Comme cela est représenté par une flèche 309 en figure 3, le système facilitateur de service 301B peut aussi envoyer un message au système d'authentification 301A indiquant le résultat final de la transaction.

En variante, dans le cas où la transaction est un paiement sans carte ou un autre type de transaction, le système d'authentification 301 transmet par exemple la commande d'exécution de transaction à un autre système facilitateur de service (non illustré en figure 3), qui exécute au moins partiellement la transaction, et fournit le résultat de la transaction au système d'authentification 301A. Dans un tel cas, la flèche 307 de la figure 3 représente un résultat de transaction final, qui est ensuite transmis du système d'authentification 301A à l'équipement facilitateur de service 301B, et les communications représentées par les flèches 308 et 309 ne sont plus réalisées.

Comme cela est représenté par une flèche 310 en figure 3, le résultat de la transaction est par exemple transmis au dispositif mobile 102. En outre, comme cela est représenté par une flèche 311 en figure 3, dans certains modes de réalisation, le système facilitateur de service 301B informe aussi l'élément de transaction 106 du résultat de la transaction, et peut fournir des données appropriées comme une référence de paiement.

La figure 5 représente schématiquement du matériel qui pourrait être utilisé pour mettre en oeuvre au moins une partie du système d'authentification 301A et/ou du système facilitateur de service 301B de la figure 3 pour réaliser le procédé de la figure 4.

Le circuit 500 comprend par exemple un dispositif de traitement 502 qui peut comprendre un ou plusieurs processeurs, sous le contrôle d'instruction mémorisées dans une mémoire d'instructions 504.

Un dispositif de stockage en mémoire 506 est aussi couplé au dispositif de traitement 502, et mémorise par exemple l'identificateur de transaction en association avec les données de transaction. Le dispositif de traitement 502 est aussi couplé à une interface de communication 508, qui permet des communications, par l'intermédiaire d'un réseau filaire et/ou sans fil, avec le dispositif mobile 102 ou l'élément de transaction 106.

Dans certains modes de réalisation, le circuit 500 comprend un environnement de traitement sécurisé 510, qui comprend par exemple un microprocesseur sécurisé 512, sous le contrôle d'une mémoire d'instructions 514, mémorisant une ou plusieurs applications logicielles qui peuvent être exécutées de façon isolée par rapport à l'exécution d'autres applications logicielles mémorisées dans la mémoire d'instructions 504. Par exemple, l'environnement de traitement sécurisé 510 est utilisé pour l'exécution d'applications logicielles sensibles, comme une application pour le cryptage de communications, et/ou pour la vérification de données sensibles comme des données biométriques ou un code PIN.

La figure 6 illustre une partie d'un système de transaction électronique 600, similaire au système 300 de la figure 3, mais dans lequel il y a plusieurs systèmes d'authentification 301A et plusieurs systèmes facilitateurs de service 301B. En particulier, dans l'exemple de la figure 6, il y a trois systèmes d'authentification et trois systèmes facilitateurs de service bien que dans des variantes de réalisation, il puisse y avoir un nombre quelconque de chaque système. Bien que cela ne soit pas illustré en figure 3, chacun des systèmes d'authentification 301A est par exemple couplé à un ou plusieurs dispositifs, et chacun des systèmes facilitateurs de service 301B est par exemple couplé à un ou plusieurs éléments de transaction.

Un réseau de communication filaire et/ou sans fil 602 permet à chacun des systèmes d'authentification 301A de communiquer avec chacun des systèmes facilitateurs de service 301B. On notera que le réseau de communication 602 assure par exemple le routage du réseau, mais ne comprend pas d'infrastructure centrale comme un répertoire de routage. Lorsqu'un dispositif mobile reçoit un jeton électronique provenant de l'un des systèmes facilitateurs de service 301B, il transmet par exemple l'identificateur de transaction à l'un des systèmes d'authentification 301A. Ce système d'authentification est capable d'identifier, sur la base de l'identificateur de transaction et/ou d'informations d'identification supplémentaires, le système facilitateur de service qui a émis l'identificateur de transaction. Le système d'authentification est ainsi capable de transmettre, par l'intermédiaire du réseau de communication 602, l'identificateur de transaction directement au système facilitateur de service qui l'a généré, et de recevoir en réponse au moins certaines des données de transaction correspondantes concernant la transaction.

Un avantage des modes de réalisation décrits ici est qu'on peut réaliser une transaction électronique sans échange de données sensibles, comme un numéro de carte de paiement, entre l'élément de transaction 106 et le dispositif mobile 102. En particulier, en communiquant un identificateur de transaction au dispositif mobile 102, puis au système d'authentification 301A, les données de transaction peuvent être récupérées par le système d'authentification 301A directement à partir du système facilitateur de service 301B.

Un autre avantage est qu'une transaction électronique peut être lancée par un dispositif mobile, et que le système ne repose pas sur un serveur centralisé pour permettre le déroulement de la transaction.

Avec la description ainsi faite d'au moins un mode de réalisation illustratif, diverses altérations, modifications et améliorations apparaîtront facilement à l'homme de l'art.

Par exemple, bien qu'on ait décrit un mode de réalisation détaillé en relation avec la figure 3, il sera clair pour l'homme de l'art qu'il y a diverses modifications qui pourraient être appliquées dans l'ordre de certains signaux.

En outre, bien qu'un seul système facilitateur de service 301B et un seul système d'authentification 301A soient illustrés dans le mode de réalisation de la figure 3, il pourrait y avoir plus d'un seul de l'un ou l'autre ou des deux de ces éléments aptes à communiquer entre eux.

## Revendications

1. Procédé pour réaliser une transaction électronique en utilisant un système (600) comprenant un dispositif mobile (102), plusieurs systèmes d'authentification (301A) et plusieurs systèmes facilitateurs de service (301B), le procédé comprenant :
communiquer (301), par un élément de transaction (106), des données de transaction concernant la transaction électronique au dispositif mobile (102);
confirmer (301), par l'utilisateur, les données de transaction et transmettre à partir du dispositif mobile (102) un message de confirmation vers l'élément de transaction (106) ;
recevoir (302, 402), par un premier système facilitateur de service (301B) parmi lesdits plusieurs systèmes facilitateurs de service, des données de transaction concernant la transaction dans une requête de transaction électronique de la part de l'élément de transaction (106) ;
générer (402) par le premier système facilitateur de service un identificateur de transaction associé à la transaction ;
transmettre (303, 303', 404) l'identificateur de transaction au dispositif mobile, dans lequel l'identificateur de transaction fait partie d'un jeton électronique qui comprend un identifiant du premier système facilitateur de service ;
transmettre (304, 406) sans fil, par le dispositif mobile, une requête d'initialisation de transaction à un premier système d'authentification (301A) parmi lesdits plusieurs systèmes d'authentification (301A), qui est celui connu du dispositif mobile, la requête d'initialisation de transaction comprenant l'identificateur de transaction ;
identifier, par le premier système d'authentification, le premier système facilitateur de service parmi lesdits plusieurs systèmes facilitateurs de service sur la base dudit identifiant du premier système facilitateur de service ;
transmettre (305, 408), par le premier système d'authentification, l'identificateur de transaction au premier système facilitateur de service ;
fournir (305), par le premier système facilitateur de service en réponse à la réception par le premier système facilitateur de service de l'identificateur de transaction, au moins certaines des données de transaction au premier système d'authentification ;
authentifier le dispositif mobile par le premier système d'authentification (306, 410) ;
générer par le premier système d'authentification une commande d'exécution de transaction ;
transmettre (307) par le premier système d'authentification la commande d'exécution de transaction au premier système facilitateur de service ; et
exécuter (308, 412), par le premier système facilitateur de service, au moins une partie de la transaction électronique.

2. Procédé selon la revendication 1, dans lequel l'identificateur de transaction est transmis au dispositif mobile dans un jeton électronique comprenant un identificateur sécurisé, le jeton ayant la forme d'un ou plusieurs des éléments suivants :
un code QR (code à réponse rapide) lisible par une application installée sur le dispositif mobile ;
une intention d'URL (localisateur uniforme de ressource) ; et
une transmission de données sans fil.

3. Procédé selon la revendication 1 ou 2, dans lequel le système (600) pour réaliser une transaction électronique comprend en outre un réseau de communication filaire et/ou sans fil (602) permettant à chacun des systèmes d'authentification (301A) de communiquer avec chacun des systèmes facilitateurs de service (301B).

4. Procédé selon la revendication 2, dans lequel le jeton électronique comprend un URL (localisateur uniforme de ressource) associé au premier système facilitateur de service.

5. Procédé selon l'une quelconque des revendications 1 à 4, dans lequel la commande d'exécution de transaction est transmise à un système facilitateur de service supplémentaire, le procédé comprenant en outre l'exécution de la transaction au moins partiellement par le système facilitateur de service supplémentaire.

6. Procédé selon l'une quelconque des revendications 1 à 5, dans lequel pendant l'authentification du dispositif mobile par le premier système d'authentification, le premier système d'authentification transmet au moins certaines des données de transaction au dispositif mobile et demande une confirmation que la transaction peut se dérouler.

7. Procédé selon l'une quelconque des revendications 1 à 6, dans lequel la transaction est un paiement de l'utilisateur destiné à un bénéficiaire, et dans lequel les données de transaction comprennent au moins le montant du paiement.

8. Procédé selon la revendication 7, comprenant en outre, après la réception de l'identificateur de transaction à partir du premier système d'authentification (301A) :
la détermination par le premier système facilitateur de service d'une pluralité de types de paiement supportés par le bénéficiaire;
la transmission par le premier système facilitateur de service d'une indication des types de paiement au premier système d'authentification;
la transmission par le premier système d'authentification de ladite indication de la pluralité de types de paiement au dispositif mobile; et
la réception sans fil par le premier système d'authentification à partir du dispositif mobile d'une sélection de l'un de la pluralité de types de paiement.

9. Procédé selon la revendication 8, comprenant en outre :
déterminer par le premier système d'authentification (301A) une pluralité de types de paiement supportés par le dispositif mobile, et transmettre une indication des types de paiement au premier système facilitateur de service ; et
sélectionner par le système facilitateur de service (301B) ou par le bénéficiaire au moins l'un des types de paiement.

10. Procédé selon l'une quelconque des revendications 1 à 9, dans lequel l'authentification du dispositif mobile est basée sur des données d'authentification mémorisées au moins partiellement dans un élément sécurisé (210) ou dans un environnement d'exécution de confiance du dispositif mobile.

11. Procédé selon la revendication 10, dans lequel les données d'authentification sont un ou plusieurs des éléments suivants :
une clé secrète ;
un code PIN introduit par un utilisateur du dispositif mobile ; et
un échantillon biométrique d'un utilisateur du dispositif mobile capturé par un dispositif de capture du dispositif mobile.

12. Système pour réaliser une transaction électronique comprenant :
un dispositif mobile (102) ;
un élément de transaction (106) configuré pour communiquer (301) des données de transaction concernant la transaction électronique au dispositif mobile (102), dans lequel le dispositif mobile (102) est configuré pour transmettre (301), après confirmation des données de transaction par l'utilisateur, un message de confirmation vers l'élément de transaction (106) ;
plusieurs systèmes d'authentification y compris un premier système d'authentification (301A) ;
plusieurs systèmes facilitateurs de service (301B), y compris un premier système facilitateur de service (301B) adapté à recevoir (302, 402) des données de transaction concernant la transaction dans une requête de transaction électronique de la part de l'élément de transaction (106), à générer (402) un identificateur de transaction associé à la transaction, et à transmettre (303, 303', 404) l'identificateur de transaction au dispositif mobile, dans lequel :
le dispositif mobile est adapté à transmettre (304, 406) une requête d'initialisation de transaction au premier système d'authentification parmi lesdits plusieurs systèmes d'authentification, qui est celui connu du dispositif mobile, la requête d'initialisation de transaction comprenant l'identificateur de transaction, dans lequel l'identificateur de transaction fait partie d'un jeton électronique qui comprend un identifiant du premier système facilitateur de service ;
le premier système d'authentification est adapté à identifier le premier système facilitateur de service parmi lesdits plusieurs systèmes facilitateurs de service sur la base dudit identifiant du premier système facilitateur de service, et à transmettre (305, 408) l'identificateur de transaction au premier système facilitateur de service ;
le premier système facilitateur de service est en outre adapté à fournir (305) au premier système d'authentification, en réponse à la réception par le premier système facilitateur de service de l'identificateur de transaction, au moins certaines des données de transaction ;
le premier système d'authentification est en outre adapté à authentifier (306, 410) le dispositif mobile, et à transmettre (307, 410) une commande d'exécution de transaction au premier système facilitateur de service ; et
le premier système facilitateur de service est en outre adapté à exécuter (308, 412) au moins une partie de la transaction en réponse à la commande d'exécution de transaction.

## Patentansprüche

1. Ein Verfahren zum Durchführen einer elektronischen Transaktion unter Verwendung eines Systems (600) das ein Mobilgerät (102), eine Vielzahl von Authentifikationssystemen (301A) und eine Vielzahl von Servicevermittlersystemen (301B) aufweist, wobei das Verfahren Folgendes aufweist:
Kommunizieren (301), und zwar über ein Transaktionselement (106), von Transaktionsdaten, die sich auf die elektrische Transaktion beziehen, an das Mobilgerät (102);
Bestätigen (301), und zwar durch den Nutzer, der Transaktionsdaten und Übertragen einer Bestätigungsnachricht von dem Mobilgerät (102) an das Transaktionselement (106);
Empfangen (302, 402), und zwar durch ein erstes Servicevermittlersystem (301B) der Vielzahl von Servicevermittlersystemen, von Transaktionsdaten, die sich auf die Transaktion beziehen, in einer elektronischen Transaktionsanforderung von dem Transaktionselement (106);
Erzeugen (402), und zwar durch das erste Servicevermittlersystem, eines Transaktionsidentifikators, der mit der Transaktion verknüpft ist;
Übertragen (303, 303', 404) des Transaktionsidentifikators an das Mobilgerät, wobei der Transaktionsidentifikator Teil eines elektronischen Tokens ist, das einen Identifikator des ersten Servicevermittlersystems beinhaltet;
drahtlos Übertragen (304, 406), und zwar durch das Mobilgerät, einer Transaktionsinitialisierungsanforderung an ein erstes Authentifikationssystem (310A) aus der Vielzahl von Authentifikationssystemen (310A), welches dasjenige ist, das dem Mobilgerät bekannt ist, wobei die Transaktionsinitialisierungsanforderung den Transaktionsidentifikator aufweist;
Identifizieren, und zwar durch das erste Authentifikationssystem, des ersten Servicevermittlersystems aus der Vielzahl von Servicevermittlersystemen auf der Basis des Identifikators des ersten Servicevermittlersystems;
Übertragen (305, 408), und zwar durch das erste Authentifikationssystem, des Transaktionsidentifikators an das erste Servicevermittlersystem;
Bereitstellen (305), und zwar durch das erste Servicevermittlersystem in Antwort auf den Empfang des Transaktionsidentifikators durch das erste Servicevermittlersystem, und zwar Bereitstellen von wenigstens einiger der Transaktionsdaten an das erste Authentifikationssystem;
Authentifizieren des Mobilgeräts durch das erste Authentifikationssystem (306, 410);
Erzeugen, und zwar durch das erste Authentifikationssystem, eines Transaktionsausführbefehls;
Übertragen (307), und zwar durch das erste Authentifikationssystem, des Transaktionsausführbefehls an das erste Servicevermittlersystem; und
Ausführen (308, 412), und zwar durch das erste Servicevermittlersystem, wenigstens eines Teils der elektronischen Transaktion.

2. Das Verfahren nach Anspruch 1, wobei der Transaktionsidentifikator an das Mobilgerät in einem elektronischen Token übertragen wird, welches einen sicheren Identifikator aufweist, wobei das Token in der Form eines oder mehr der folgenden ist:
eines QR (quick response) Codes, der lesbar ist für eine Anwendung ist, die auf dem Mobilgerät installiert ist;
eines URL-Ziels bzw. URL-intent (Uniform Resource Locator intent); und
einer drahtlosen Datenübertragung.

3. Das Verfahren nach Anspruch 1 oder 2, wobei das System (600) zum Durchführen einer elektronischen Transaktion ferner ein drahtgebundenes und/oder drahtloses Kommunikationsnetzwerk (602) aufweist, das es jedem der Authentifikationssysteme (301A) ermöglicht mit jedem der Servicevermittlersysteme (301B) zu kommunizieren.

4. Das Verfahren nach Anspruch 2, wobei das elektronische Token eine URL (uniform resource locator) aufweist, die mit dem ersten Servicevermittlersystem verknüpft ist.

5. Das Verfahren nach einem der Ansprüche 1 bis 4, wobei der Transaktionsausführbefehl an ein weiteres Servicevermittlersystem übertragen wird, wobei das Verfahren ferner Ausführen der Transaktion aufweist, und zwar zumindest teilweise durch das weitere Servicevermittlersystem.

6. Das Verfahren nach einem der Ansprüche 1 bis 5, wobei während der Authentifikation des Mobilgeräts durch das erste Authentifikationssystem das erste Authentifikationssystem wenigstens einige der Transaktionsdaten an das Mobilgerät überträgt und Bestätigung anfordert, dass die Transaktion fortfahren kann.

7. Das Verfahren nach einem der Ansprüche 1 bis 6, wobei die Transaktion eine Zahlung des Nutzers an einen Zahlungsempfänger ist, und wobei die Transaktionsdaten wenigstens den Betrag der Zahlung aufweisen.

8. Das Verfahren nach Anspruch 7, das ferner Folgendes aufweist, und zwar nach dem Empfang des Transaktionsidentifikators von dem ersten Authentifikationssystem (301A):
Bestimmen, und zwar durch das erste Servicevermittlersystem, einer Vielzahl von Zahlungsarten, die von dem Zahlungsempfänger unterstützt werden;
Übertragen, und zwar durch das erste Servicevermittlersystem, einer Anzeige der Zahlungsarten an das erste Authentifikationssystem;
Übertragen, und zwar durch das erste Authentifikationssystem, der Anzeige der Vielzahl von Zahlungsarten an das Mobilgerät; und
drahtlos Empfangen, und zwar durch das erste Authentifikationssystem von dem Mobilgerät, einer Auswahl einer aus der Vielzahl von Zahlungsarten.

9. Das Verfahren nach Anspruch 8, das ferner Folgendes aufweist:
Bestimmen, und zwar durch das erste Authentifikationssystem (301A), einer Vielzahl von Zahlungsarten, die von dem Mobilgerät unterstützt werden, und Übertragen einer Anzeige der Zahlungsarten an das erste Servicevermittlersystem; und
Auswählen, und zwar durch das Servicevermittlersystem (301B) oder durch den Zahlungsempfänger von wenigstens einer aus den Zahlungsarten.

10. Das Verfahren nach einem der Ansprüche 1 bis 9, wobei die Authentifikation des Mobilgeräts auf Authentifikationsdaten basiert, die wenigstens zum Teil in einem sicheren Element (210) oder in einer vertrauenswürdigen Anwendungsumgebung des Mobilgeräts gespeichert sind.

11. Das Verfahren nach Anspruch 10, wobei die Authentifikationsdaten eines oder mehrere aus dem Folgenden sind:
ein geheimer Schlüssel;
ein PIN Code, der von einem Nutzer des Mobilgeräts eingegeben wird, und
eine biometrisches Muster bzw. Sample eines Nutzers des Mobilgeräts, die durch ein Aufnahmegerät des Mobilgeräts aufgenommen wird.

12. Ein System zum Ausführen einer elektronischen Transaktion, das Folgendes aufweist,
ein Mobilgerät (102);
ein Transaktionselement (106), das eingerichtet ist Transaktionsdaten, die sich auf die elektrische Transaktion beziehen, an das Mobilgerät (102) zu kommunizieren (301), wobei das Mobilgerät (102) eingerichtet ist nach Bestätigung der Transaktionsdaten durch den Nutzer eine Bestätigungsnachricht an das Transaktionselement (106) zu übertragen (201);
mehrere Authentifikationssysteme, die ein erstes Authentifikationssystem (301A) beinhalten;
eine Vielzahl von Servicevermittlersystemen (301B), die ein erstes Servicevermittlersystem (301B) beinhalten, das eingerichtet ist Transaktionsdaten zu empfangen (302, 402), die sich auf die Transaktion beziehen, und zwar in einer elektronischen Transaktionsanforderung von dem Transaktionselement (106), und einen Transaktionsidentifikator zu erzeugen (402), der mit der Transaktion verknüpft ist, und den Transaktionsidentifikator an das Mobilgerät zu übertragen (303, 303', 404), wobei:
das Mobilgerät eingerichtet ist eine Transaktionsinitialisierungsanforderung an das erste Authentifikationssystem aus der Vielzahl von Authentifikationssystemen zu übertragen (304, 406), welches dasjenige ist, das dem Mobilgerät bekannt ist, wobei die Transaktionsinitialisierungsanforderung den Transaktionsidentifikator aufweist, wobei der Transaktionsidentifikator Teil eines elektronischen Tokens ist, das einen Identifikator eines ersten Servicevermittlersystems aufweist;
das erste Authentifikationssystem eingerichtet ist das erste Servicevermittlersystem aus der Vielzahl von Servicevermittlersystemen auf der Basis des Identifikators des ersten Servicevermittlersystems zu identifizieren und den Transaktionsidentifikator an das erste Servicevermittlersystem zu übertragen (305, 408);
das erste Servicevermittlersystem ferner eingerichtet ist in Antwort auf den Empfang des Transaktionsidentifikators durch das erste Servicevermittlersystem wenigstens einige der Transaktionsdaten an das erste Authentifikationssystem bereitzustellen (305);
das erste Authentifikationssystem ferner eingerichtet ist das Mobilgerät zu authentifizieren (306, 410), und einen Transaktionsausführbefehl an das erste Servicevermittlersystem zu übertragen (307, 410); und
das erste Servicevermittlersystem ferner eingerichtet ist, wenigstens einen Teil der elektronischen Transaktion in Antwort auf den Transaktionsausführbefehl auszuführen (308, 412).

## Claims

1. A method of performing an electronic transaction using a system (600) comprising a mobile device (102), a plurality of authentication systems (301A) and a plurality of service facilitator systems (301B), the method comprising:
communicating (301), via a transaction element (106), transaction data relating to the electronic transaction to the mobile device (102);
confirming (301), by the user, of the transaction data and transmitting from the mobile device (102) a confirmation message to the transaction element (106);
receiving (302, 402), by a first service facilitator system (301B) of said plurality of service facilitator systems, transaction data relating to the transaction in an electronic transaction request from the transaction element (106);
generating (402), by the first service facilitator system, a transaction identifier associated with the transaction;
transmitting (303, 303', 404) the transaction identifier to the mobile device, wherein the transaction identifier is part of an electronic token that includes an identifier of the first service facilitator system;
wirelessly transmitting (304, 406), by the mobile device, a transaction initialisation request to a first authentication system (301A) among said plurality of authentication systems (301A), which is the one known to the mobile device, the transaction initialisation request comprising the transaction identifier;
identifying, by the first authentication system, the first service facilitator system among said plurality of service facilitator systems on the basis of said identifier of the first service facilitator system;
transmitting (305, 408), by the first authentication system, the transaction identifier to the first service facilitator system;
providing (305), by the first service facilitator system in response to the reception by the first service facilitator system of the transaction identifier, at least some of the transaction data to the first authentication system;
authenticating the mobile device by the first authentication system (306, 410);
generating, by the first authentication system, a transaction execution command;
transmitting (307), by the first authentication system, the transaction execution command to the first service facilitator system; and
executing (308, 412), by the first service facilitator system, at least part of the electronic transaction.

2. The method of claim 1, wherein the transaction identifier is transmitted to the mobile device in an electronic token comprising a secure identifier, the token being in the form of one or more of the following:
a QR (quick response) code readable by an application installed on the mobile device;
a URL-intent (Uniform Resource Locator intent); and
a wireless data transmission.

3. The method of claim 1 or 2, wherein the system (600) for performing an electronic transaction further comprises a wired and/or wireless communication network (602) enabling each of the authentication systems (301A) to communicate with each of the service facilitator systems (301B).

4. The method of claim 2, wherein the electronic token comprises a URL (uniform resource locator) associated with the first service facilitator system.

5. The method of any of claims 1 to 4, wherein the transaction execution command is transmitted to a further service facilitator system, the method further comprising executing the transaction at least partially by the further service facilitator system.

6. The method of any of claims 1 to 5, wherein during the authentication of the mobile device by the first authentication system, the first authentication system transmits at least some of the transaction data to the mobile device and requests confirmation that the transaction can proceed.

7. The method of any of claims 1 to 6, wherein the transaction is a payment from the user to a payee, and wherein the transaction data comprises at least the amount of the payment.

8. The method of claim 7, further comprising, after the reception of the transaction identifier from the first authentication system (301A):
determining by the first service facilitator system a plurality of payment types supported by the payee;
transmitting by the first service facilitator system an indication of the payment types to the first authentication system;
transmission by the first authentication system the indication of the plurality of payment types to the mobile device; and
wirelessly receiving, by the first authentication system from the mobile device, a selection of one of the plurality of payment types.

9. The method of claim 8, further comprising:
determining by the first authentication system (301A) a plurality of payment types supported by the mobile device, and transmitting an indication of the payment types to the first service facilitator system; and
selecting by the service facilitator system (301B) or the payee at least one of the payment types.

10. The method of any of claims 1 to 9, wherein the authentication of the mobile device is based on authentication data stored at least partially in a secure element (210) or in a trusted execution environment of the mobile device.

11. The method of claim 10, wherein the authentication data is one or more of the following:
a secret key;
a PIN code entered by a user of the mobile device; and
a biometric sample of a user of the mobile device captured by a capturing device of the mobile device.

12. A system for carrying out an electronic transaction comprising:
a mobile device (102);
a transaction element (106) configured to communicate (301) transaction data relating to the electronic transaction to the mobile device (102), wherein the mobile device (102) is configured to transmit (201), after confirmation of the transaction data by the user, a confirmation message to the transaction element (106);
several authentication systems including a first authentication system (301A);
a plurality of service facilitator systems (301B), including a first service facilitator system (301B) adapted to receive (302, 402) transaction data relating to the transaction in an electronic transaction request from the transaction element (106), to generate (402) a transaction identifier associated with the transaction, and to transmit (303, 303', 404) the transaction identifier to the mobile device, wherein:
the mobile device is adapted to transmit (304, 406) a transaction initiation request to the first authentication system of said plurality of authentication systems, which is the one known to the mobile device, the transaction initiation request comprising the transaction identifier, wherein the transaction identifier is part of an electronic token that comprises an identifier of the first service facilitator system;
the first authentication system is adapted to identify the first service facilitator system among said several service facilitator systems based on the identifier of the first service facilitator system, and to transmit (305, 408) the transaction identifier to the first service facilitator system;
the first service facilitator system is further adapted to provide (305) to the first authentication system, in response to the reception by the first service facilitator system of the transaction identifier, at least some of the transaction data;
the first authentication system is further adapted to authenticate (306, 410) the mobile device, and to transmit (307, 410) a transaction execution command to the first service facilitator system; and
the first service facilitator system is further adapted to execute (308, 412) at least part of the transaction in response to the transaction execution command.
